# EUROPEAN PATENT APPLICATION

(11) **EP 2 357 458 A1**
(43) Date of publication of application: **17.08.2011**
(21) Application number: 11151980.7
(22) Date of filing: 25.01.2011
(51) Int. Cl.: G01J 5/34, G01J 1/46, G01J 5/22

(54) **Detection circuit for heat sensor, heat sensor device, and electronic device**

(30) Priority: 26.01.2010 JP 2010014136; 22.11.2010 JP 2010260002
(71) Applicant: Seiko Epson Corporation, Shinjuku-ku Tokyo (JP)
(72) Inventor: Yoshizaki, Kei, Nagano 392-8502 (JP); Yamamura, Mitsuhiro, Nagano 392-8502 (JP)
(74) Representative: HOFFMANN EITLE

(57) **Abstract**

A detection circuit for a heat sensor includes a charge circuit (20) provided between a second power supply node (VDD) and a detection node (N1) of a heat sensing element (CF), a discharge circuit (30) provided between the detection node (N1) and a first power supply node (VSS), and a voltage detection circuit (50). The discharge circuit has a discharge resistance element (RA) and a discharge transistor (T2) provided in series between the detection node and the first power supply node.

## Description

### CROSS-REFERENCE TO RELATED APPLICATIONS

This application claims priority to Japanese Patent Application No. 2010-014136 filed on January 26, 2010 and Japanese Patent Application No. 2010-260002 filed on November 22, 2010. The entire disclosures of Japanese Patent Application Nos. 2010-014136 and 2010-260002 are hereby incorporated herein by reference.

### BACKGROUND

### Technical Field

The present invention relates to a detection circuit for a heat sensor, to a heat sensor device, to an electronic device, etc.

### Related Art

Circuits that make use of pyroelectric elements for detecting infrared rays have been known in the past. For example, infrared rays with a wavelength of about 10 µm are radiated from the human body, and temperature information or the presence of a body can be acquired in non-contact fashion by detecting this radiation. Therefore, intrusion detection or physical amount measurement can be accomplished by utilizing an infrared detection circuit such as this. Also, if an infrared camera equipped with an FPA (focal plane array) is used, this makes possible night-vision devices that detect and display the forms of people and so forth at night when driving a vehicle, thermographic devices used for influenza quarantines and the like, and so on.

The technology disclosed in Japanese Laid-Open Patent Application S59-142427 and Japanese Laid-Open Patent Application H6-265411, for example, is known as prior art in the field of infrared detection circuits. With the prior art in Japanese Laid-Open Patent Application S59-142427, for instance, pyroelectric current from a pyroelectric element is read while using a chopper to repeatedly shine and block infrared rays on and from the pyroelectric element.

However, problems encountered with this prior art included the need for synchronization between the chopper and the FPA, the short chopper service life, and so forth.

With the prior art in Japanese Laid-Open Patent Application H6-265411, a method is employed in which pulse voltage is applied to a pyroelectric element. Specifically, the amount of spontaneous polarization, etc., of a pyroelectric element brought about by a ferroelectric changes with the temperature of the pyroelectric element, attributable to the infrared rays directed at the pyroelectric element. In view of this, the amount of incident infrared rays can be measured by measuring the surface charge of the pyroelectric element, which varies according to the spontaneous polarization, etc.

With this prior art, however, a problem is that current keeps on flowing to the discharge resistance element during pulse voltage application, so power consumption ends up being higher.

Other known technology involves using an amplifier or the like to amplify the change in the electrical capacitance of a pyroelectric element. With this prior art, however, a problem is that the complexity of the circuit configuration generates noise, increases power consumption, and so on.

### SUMMARY

The several aspects of the present invention provide a detection circuit for a heat sensor, a heat sensor device, an electronic device, and so forth with which highly accurate thermal detection is possible with a simple constitution.

One aspect of the present invention relates to a detection circuit for a heat sensor, which comprises a charge circuit provided between a detection node, which is a node at one end of a heat sensing element, and a second power supply node, and a discharge circuit provided between the detection node and a first power supply node, wherein the discharge circuit has a discharge resistance element and a discharge transistor provided in series between the detection node and the first power supply node.

With one aspect of the present invention, it is possible to constitute a detection circuit for a heat sensor from a simple circuit, by using a polarization detection method in which no chopper or the like is necessary, for example.

Also, in one aspect of the present invention, the charge circuit includes a charge transistor provided between the second power supply node and the detection node, in a charging period the charge transistor is in its on state and the discharge transistor is in its off state, and in a discharge period the charge transistor is in its off state and the discharge transistor is in its on state.

With this constitution, current does not flow to the discharge resistance element in the charging period, so power consumption can be reduced.

Also, one aspect of the present invention comprises a control circuit and a voltage detection circuit for detecting the voltage of the detection node, wherein the control circuit performs a control action that puts the charge transistor in its on state and puts the discharge transistor in its off state in the charging period, performs a control action that puts the charge transistor in its off state and puts the discharge transistor in its on state in the discharge period, and performs a control action that puts the charge transistor in its off state and puts the discharge transistor in its off state, and directs the voltage detection circuit to sample the voltage of the detection circuit, in a read period that follows the discharge period.

With this constitution, discharge of the heat sensor stops in the read period, and the voltage value is maintained at the point the discharge is stopped, so this voltage value can be detected by the voltage detection circuit on the basis of a sampling directive from the control circuit.

Also, with one aspect of the present invention, the control circuit may change the timing at which the discharge transistor is put in its off state, according to the measurement mode of the heat sensing element.

With this constitution, the optimal discharge time can be set according to the measurement mode, so the voltage of the detection node can be detected more accurately. As a result, it is possible to improve the detection accuracy of the heat sensor detection circuit.

Also, with one aspect of the present invention, when the measurement mode of the heat sensing element is low temperature measurement mode, the control circuit sets the timing at which the discharge transistor is put in its off state to a first timing, and when the measurement mode of the heat sensing element is high temperature measurement mode, the control circuit sets the timing at which the discharge transistor is put in its off state to a second timing that is later than the first timing.

With this constitution, voltage can be detected at the optimal timing in the case of low temperature measurement in which the voltage of the detection node drops rapidly. As a result, it is possible to improve the detection accuracy for the heat sensor detection circuit over a wide temperature range.

Another aspect of the present invention relates to a heat sensor device, comprising a sensor array having a plurality of sensor cells, one or more row lines, one or more column lines, a row selection circuit connected to the one or more row lines, a read circuit connected to the one or more column lines, and a control circuit, wherein each of the plurality of sensor cells comprises a heat sensing element, a charge circuit provided between a detection node, which is a node at one end of the heat sensing element, and a second power supply node, a discharge circuit provided between the detection node and a first power supply node, and a selection switching element provided between the detection node and any of the one or more column lines.

With this other aspect of the present invention, the circuit configuration of the sensor cells can be simplified by having each column share a detector, using the polarization detection method. As a result, the sensor cells can be smaller in size, so the heat sensor device can be more precise.

Another aspect of the present invention relates to a heat sensor device, comprising a sensor array having a plurality of sensor cells, one or more row lines, one or more column lines, a row selection circuit connected to the one or more row lines, a read circuit connected to the one or more column lines, and a control circuit, wherein each of the plurality of sensor cells comprises a heat sensing element, a charge circuit provided between a detection node, which is a node at one end of the heat sensing element, and a second power supply node, and a selection switching element provided between the detection node and any of the one or more column lines, the read circuit has a discharge resistance element provided between the first power supply node and any of the one or more column lines, and in a charging period the charge circuit charges the heat sensing element, and in a discharge period that follows the charging period the selection switching element is put in its on state and the heat sensing element is discharged via the discharge resistance element.

With this other aspect of the present invention, the circuit configuration of the sensor cells can be simplified by using the polarization detection method, in which no chopper or the like is necessary, for example. As a result, the sensor cells can be smaller in size, so the heat sensor device can be more precise. Also, since no current flows to the discharge resistance element in the charging period, power consumption can be reduced. Also, signals can be detected with a simple circuit, and all the signals in the same column can be detected with a single resistance element. As a result, it is possible to reduce variance in detection.

Another aspect of the present invention relates to an electronic device that includes the heat sensor detection circuit discussed above.

Another aspect of the present invention relates to an electronic device that includes the heat sensor device discussed above.

### BRIEF DESCRIPTION OF THE DRAWINGS

Referring now to the attached drawings which form a part of this original disclosure:

FIGS. 1A to 1C illustrate a polarization detection method;

FIG. 2 is an example graph of detected voltage versus discharge time;

FIGS. 3A and 3B are examples of the configuration of a heat sensor detection circuit;

FIG. 4 is a timing chart for the heat sensor detection circuit;

FIG. 5 is a graph illustrating the switching of the discharge period according to measurement mode;

FIGS. 6A and 6B are examples of the configuration of a heat sensor device;

FIG. 7 is a detail configuration example of a sensor array and a read circuit;

FIG. 8 is another configuration example of a sensor array and a read circuit;

FIG. 9 is another configuration example of a sensor cell; and

FIG. 10 is a configuration example of an electronic device.

### DETAILED DESCRIPTION OF EXEMPLARY EMBODIMENTS

Preferred embodiments of the present invention will now be described in detail. The embodiments described below are not intended to inappropriately limit the content of the present invention as set forth in the Claims, and not all of the components described in these embodiments are necessarily essential as the solution means of the present invention.

### 1. Methods Used with Heat Sensor Detection Circuit

With the heat sensor detection circuit of this embodiment, a pyroelectric element, for example, can be used as a heat sensing element. A pyroelectric element is an element that makes use of lead zirconate titanate (PZT) or another such ferroelectric, for example, and measures a temperature by utilizing the fact that the polarization of a ferroelectric varies with the temperature. Methods used in heat sensors featuring a pyroelectric element include pyroelectric current detection, polarization detection (capacitance detection), and so forth. The heat sensor detection circuit of this embodiment can be utilized in measuring the temperature of an infrared source by detecting infrared rays, for example.

With a pyroelectric current detection method, the temperature of a pyroelectric element is changed to generate pyroelectric current by using a chopper or the like to periodically block off the infrared rays emitted by the pyroelectric element. However, problems include the need to synchronize the chopper with the detection circuit, and a short chopper service life. With the heat sensor detection circuit in this embodiment, polarization detection is used, which requires no chopper. The principle behind polarization detection will now be described.

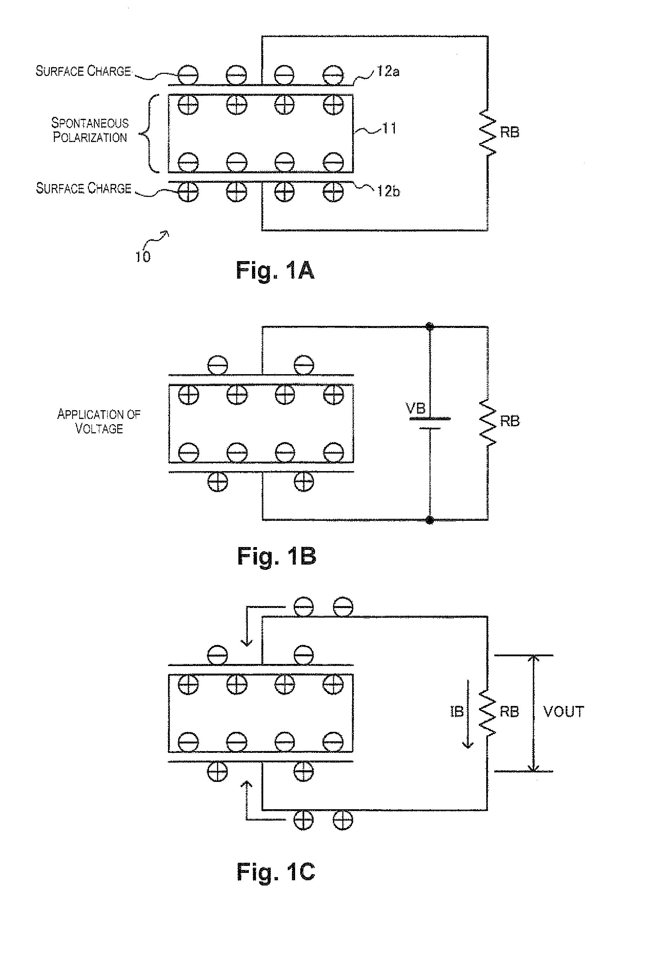

FIGS. 1A to 1C illustrate a polarization detection method. FIG. 1A shows the surface charge produced in electrodes 12a and 12b and the spontaneous polarization of a pyroelectric 11 in an initial state. This initial state is electrically neutral, that is, the amount of spontaneous polarization and the surface charge are in equilibrium, and the charges do not move. Therefore, no current flows to a resistance element RB. Then, as shown in FIG. 1B, a voltage VB is applied to the pyroelectric element 10. The application of the voltage VB causes part of the surface charge to be eliminated, so the state of equilibrium between the amount of spontaneous polarization and the surface charge is lost.

Then, as shown in FIG. 1C, the voltage source is removed, whereupon the charges move so that equilibrium is restored between the amount of spontaneous polarization and the surface charge, and as a result a discharge current IB is produced. The value of the discharge current IB is a function of the amount of spontaneous polarization (or capacitance) of the pyroelectric 11 if the applied voltage VB is constant, and the amount of spontaneous polarization (or capacitance) is a function of the temperature of the pyroelectric 11. Therefore, infrared rays can be detected, and the temperature of the infrared ray source can be measured, by detecting this current IB or the detected voltage VOUT generated at both ends of the resistance element RB. An advantage to this polarization detection method is that there is no need for a chopper or the like, since it is not necessary for the infrared rays emitted by the pyroelectric element to be periodically blocked.

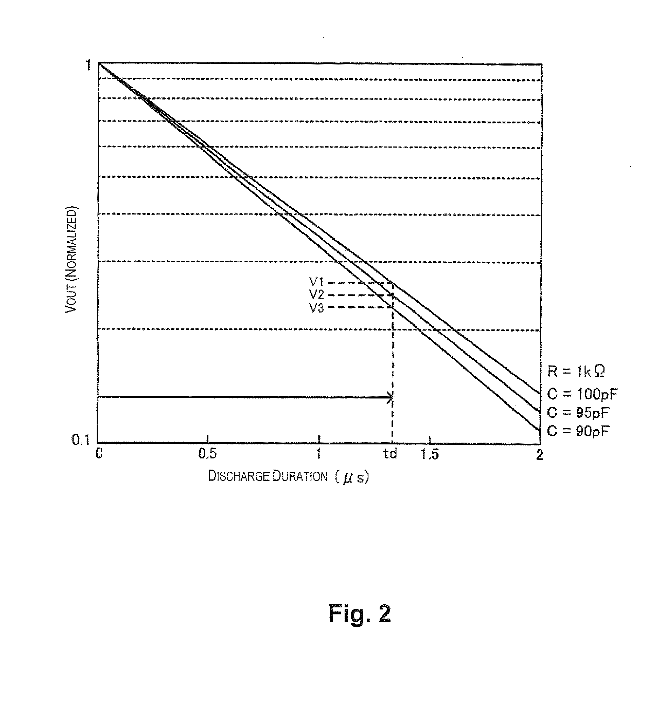

FIG. 2 is an example graph of detected voltage versus discharge time. This graph shows the change over time in the detected voltage VOUT caused by discharge when the resistance value of the resistance element is 1 kΩ and the capacitance of the heat sensing element (pyroelectric element) is 90 pF, 95 pF, or 100 pF. The discharge current from the pyroelectric element goes down over time, eventually reaching zero, but the change in the current value varies with the capacitance of the pyroelectric element. Specifically, when the capacitance is small, the discharge current (or the detected voltage VOUT) goes down rapidly, and when the capacitance is large, the discharge current goes down slowly. The capacitance of the pyroelectric element is a function of the temperature of the pyroelectric element. For example, with lead zirconate titanate (PZT), the capacitance is small when the temperature is low, and the capacitance is large when the temperature is high. Therefore, the temperature of the pyroelectric element can be detected, and the temperature of the infrared source measured, by detecting the change over time in the detected voltage VOUT. More specifically, as shown in FIG. 2, the temperature can be measured by detecting VOUT at the point when a specific discharge time td has elapsed. For instance, if the voltage value of the detected voltage VOUT at the time td is V1, V2, or V3, the corresponding capacitance value will be 100 pF, 95 pF, or 90 pF, respectively, so the temperature can be calculated from the temperature dependence of the capacitance of the pyroelectric element.

As described above, with the heat sensor detection circuit of this embodiment, temperature measurement by polarization detection method can be performed by using a pyroelectric element, for example, as a heat sensing element. Advantage to not using pyroelectric current detection is that there is no need for a chopper or the like.

### 2. Heat Sensor Detection Circuit

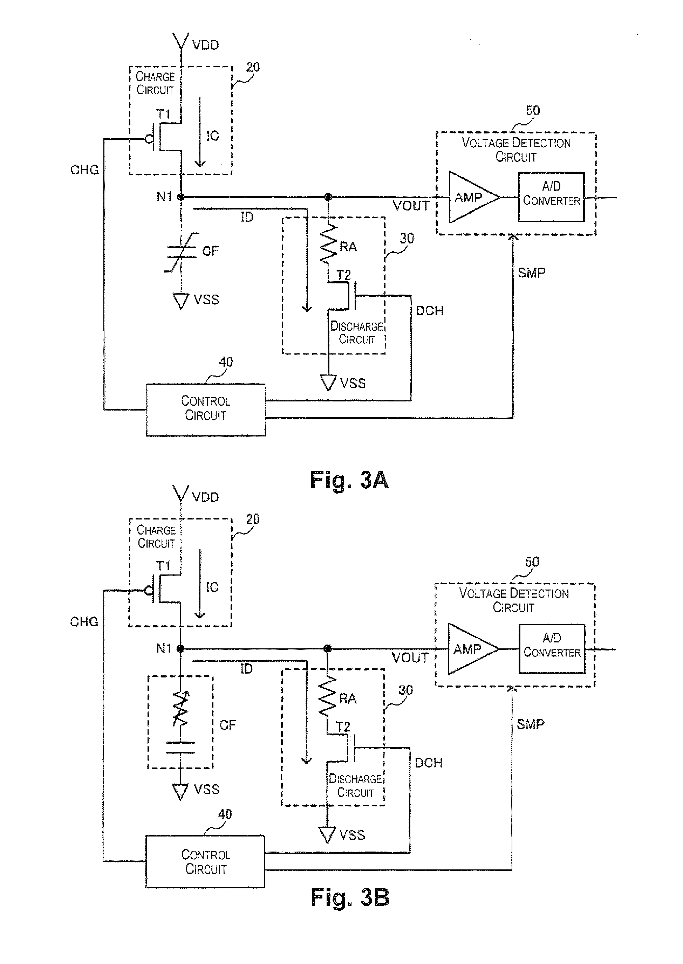

FIGS. 3A and 3B are examples of the configuration of a heat sensor detection circuit in this embodiment. The configuration example in FIG. 3A includes pyroelectric element (as a heat sensing element CF), a charge circuit 20, a discharge circuit 30, a control circuit 40, and a voltage detection circuit 50. The charge circuit 20 is provided between a high potential-side power supply node VDD (more broadly, a first power supply node) and a detection node N1. The heat sensor detection circuit of this embodiment is not limited to the configuration in FIGS. 3A and 3B, and various modifications are possible, such as omitting some of the constituent elements, replacing with other constituent elements, or adding other constituent elements.

The configuration example in FIG. 3B the heat sensing element CF comprises a bolometer connected in series with a capacitor. The resistance of a bolometer increases at higher temperatures and decreases at lower temperatures. Therefore, the discharge last longer when the temperature is high, and lasts a shorter time when the temperature is low, so temperature can be measured by detecting the time change in the detected voltage VOUT.

The charge circuit 20 includes a charge transistor T1 provided between the high potential-side power supply node VDD and the detection node N1. The discharge circuit 30 includes a discharge resistance element RA and a discharge transistor T2 provided in series between the detection node N1 and a low potential-side power supply node VSS. In the charging period, the charge transistor T1 is in its on state and the discharge transistor T2 is in its off state. In the discharge period, meanwhile, the charge transistor T1 is in its off state and the discharge transistor T2 is in its on state.

In FIGS. 3A and 3B, the charge transistor T1 is a P-type (more broadly, a first conduction type) transistor, but may instead be an N-type (more broadly, a second conduction type) transistor. The connection between the discharge resistance element RA and the discharge transistor T2 may be reversed from what is shown in FIGS. 3A and 3B. Specifically, the T2 drain may be connected to the detection node, and RA provided between the low potential-side power supply node VSS and the T2 source.

The control circuit 40 controls the charge circuit 20, the discharge circuit 30, and the voltage detection circuit 50. More specifically, the control circuit 40 performs a control action in the charging period so that the charge transistor T1 goes into its on state and the discharge transistor T2 goes into its off state. It also performs a control action in the discharge period so that the charge transistor T1 goes into its off state and the discharge transistor T2 goes into its on state. In a read period that follows the discharge period, control is performed so that the charge transistor T1 goes into its off state and the discharge transistor T2 goes into its off state. The control circuit 40 also issues a directive to the voltage detection circuit 50 to sample (acquire) the voltage (detected voltage VOUT) of the detection node N1.

The voltage detection circuit 50 detects the voltage (detected voltage VOUT) of the detection node N1 on the basis of control by the control circuit 40. More specifically, the voltage detection circuit 50 includes, for example, an amplifier AMP that amplifies the detected voltage VOUT, an A/D converter that converts analog data into digital data, etc.

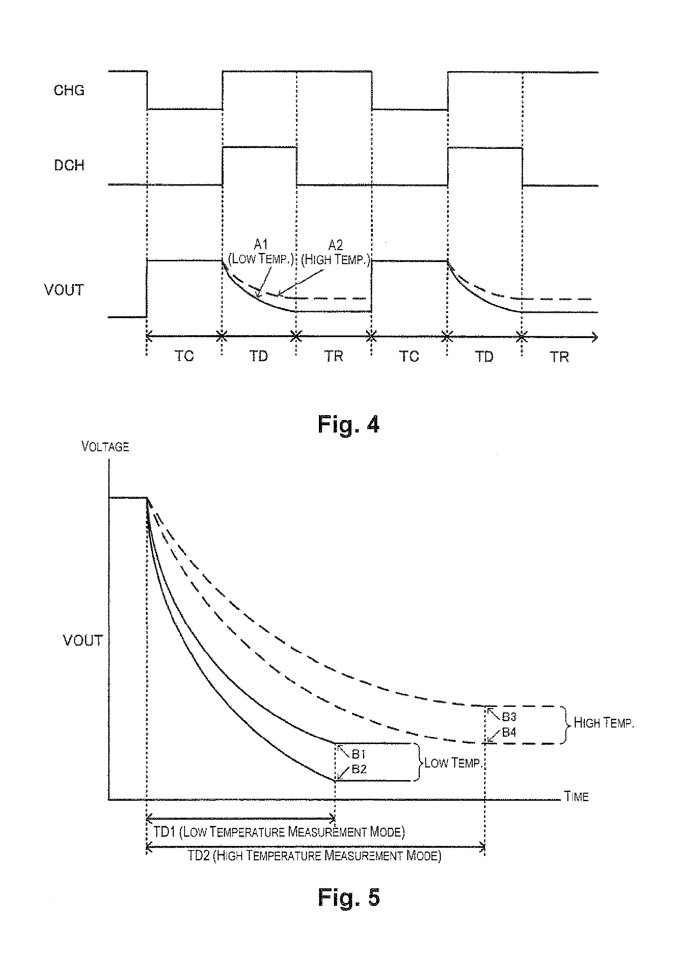

FIG. 4 is an example of a timing chart for the heat sensor detection circuit in this embodiment (FIGS. 3A and 3B). The operation of the heat sensor detection circuit will now be described through reference to FIG. 4.

In the charging period TC, a charging control signal CHG is at its L level (low potential level), so the charge transistor T1 is in its on state. Also, since a discharge control signal DCH is at its L level, the discharge transistor T2 is in its off state. Also, since the discharge control signal DCH is at the L level, the discharge transistor T2 is in its off state. As a result, voltage is applied at the H level (high potential level) to the heat sensing element CF, charge current IC flows through the charge transistor T1, and the CF is charged. In the charging period TC, the discharge transistor T2 is in its off state and no current flows to the discharge resistance element RA, so power consumption can be reduced.

In the td, the charging control signal CHG is at the H level, so the charge transistor T1 is in its off state. Also, the discharge control signal DCH is at the H level, so the discharge transistor T2 is in its on state. As a result, no more voltage is applied to the heat sensing element CF, discharge current ID flows through the discharge resistance element RA and the discharge transistor T2, and the CF is discharged. This discharge begins to lower the detected voltage VOUT (output voltage), but as mentioned above, with lead zirconate titanate (PZT), for example, the capacitance drops rapidly when the temperature is low (A1 in FIG. 4), and the capacitance drops slowly when the temperature is high (A2 in FIG. 4).

In the read period TR, the charging control signal CHG is at the H level, so the charge transistor T1 is in its off state. Also, the discharge control signal DCH is at the L level, so the discharge transistor T2 is in its off state. As a result, discharge of the heat sensing element CF stops, and the detected voltage VOUT is maintained at the voltage value at the point when discharge stopped. The voltage detection circuit 50 detects this voltage value on the basis of a sampling signal SMP from the control circuit 40.

As described above, the heat sensor detection circuit of this embodiment makes use of polarization detection (capacitance detection) that requires no chopper or the like, so temperature measurement (infrared detection) is possible with a simple circuit configuration. Furthermore, since no current flows to the discharge resistance element in the charging period, the power consumption of the detection circuit can be reduced.

As already discussed, the capacitance value of the heat sensing element CF, or the resistance value in the case of a bolometer, varies with the temperature of the CF, so the rate at which the detected voltage VOUT is lowered by discharge will vary. Accordingly, the discharge time suited to voltage detection will vary with the temperature region to be measured. Specifically, the VOUT falls quickly in a low temperature region, so it is preferable for the discharge time to be shorter than when the temperature is high. This is because as the discharge time is lengthened, the VOUT converges on the L level, so it becomes more difficult to detect voltage differences accurately, and as a result, detection accuracy (temperature resolution) suffers.

On the other hand, when the temperature region to be measured is higher, the drop of the VOUT is slower, so it is preferable to make the discharge time longer than when the temperature is low. When the discharge time is shortened, discharge ends up being stopped before there is a large voltage difference in VOUT, so it is more difficult to detect voltage differences accurately, and as a result, detection accuracy (temperature resolution) suffers.

With the heat sensor detection circuit of this embodiment, the control circuit 40 can switch the timing at which the discharge transistor T2 is put in its off state according to the measurement mode of the heat sensing element CF. More specifically, if lead zirconate titanate (PZT) is used as the heat sensing element CF, for example, and when the measurement mode of the heat sensing element CF is a low temperature measurement mode, the control circuit 40 can set the timing at which the discharge transistor T2 is put in its off state to be earlier than when the measurement mode is a high temperature measurement mode.

When another material is used as the heat sensing element CF, the results may be the opposite those with PZT, so that the capacitance is larger and the voltage drop slower in the low temperature region, and the capacitance is smaller and the voltage drop faster in the high temperature region. In this case, the timing setting may be reversed from that given above. Specifically, when the measurement mode of the heat sensing element CF is the high temperature measurement mode, the timing at which the discharge transistor T2 is put in its off state is set to be earlier than when the measurement mode is the low temperature measurement mode.

FIG. 5 is a graph illustrating the switching of the discharge period according to measurement mode. When the measurement temperature region is the low temperature region, the detected voltage VOUT drops rapidly, as indicated by the solid line in FIG. 5, for example. Therefore, in low temperature measurement mode, if the discharge period TD is changed to a discharge period TD1 with a shorter discharge duration, the voltage value can be detected at a point when the voltage difference is larger, as indicated by B1 and B2 in FIG. 5.

On the other hand, when the measurement temperature region is the high temperature region, the VOUT changes slowly, as indicated by the broken line in FIG. 5, for example. Therefore, in high temperature measurement mode, if the discharge period TD is changed to a discharge period TD2 with a longer discharge duration, the voltage value can be detected at a point when the voltage difference is larger, as indicated by B3 and B4 in FIG. 5.

The result of doing this is that the optimal discharge time can be set according to the temperature region of the object being measured, so it is possible to raise the detection accuracy (temperature resolution) of the heat sensor detection circuit over a wide temperature range.

For instance, with a thermographic device that acquires the temperature distribution of an object, the body temperature of a person can be measured to a high degree of accuracy by switching to the optimal measurement mode (low temperature measurement mode) for a temperature region centering around body temperature. Also, with a security device that detects fire or heat, for example, the fire or heat can be reliably detected by switching to high temperature measurement mode. Switching the measurement mode in this way makes it possible to raise the detection accuracy of a temperature region as dictated by the application.

### 3. Heat Sensor Device

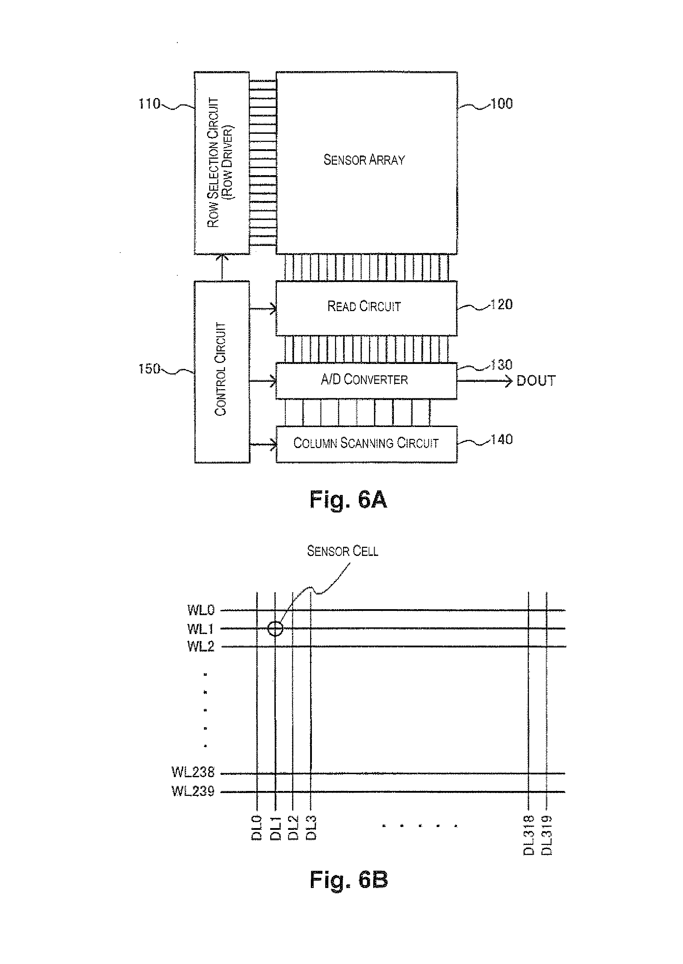

FIG. 6A is an example of the configuration of the heat sensor device in this embodiment. This heat sensor device includes a sensor array 100, a row selection circuit (row driver) 110, and a read circuit 120. It can also include an A/D converter 130 and a control circuit 150. This heat sensor device can be used to obtain an infrared camera that is used in night vision devices or the like, for example.

A plurality of sensor cells are arranged (disposed) in the sensor array 100 (focal plane array). Also, a plurality of row lines (word lines, scanning lines) and a plurality of column lines (data lines) are provided. The number of row lines and of column lines may also be just one. For example, if there is just one row line, a plurality of sensor cells are arranged in the direction along the row line in FIG. 6A (lateral direction). Meanwhile, if there is just one column line, a plurality of sensor cells are arranged in the direction along the column line (longitudinal direction).

As shown in FIG. 6B, the sensor cells of the sensor array 100 are each disposed (formed) at a location corresponding to the intersection between a row line and a column line. For example, the sensor cell in FIG. 6B is disposed at a location corresponding to the intersection between a row line WL1 and a column line DL1. The same applies to the other sensor cells.

The row selection circuit 110 is connected to one or more row lines, and operates to select the row lines. For instance if we use the QVGA (320 x 240 pixels) sensor array 100 (focal plane array) in FIG. 6B as an example, the row lines WL0, WL1, WL2, ..., WL239 are selected (scanned) one after the other. Specifically, a signal for selecting these row lines (word selection signal) is outputted to the sensor array 100.

The read circuit 120 is connected to one or more column lines, and operates to read these column lines. If we use the QVGA sensor array 100 as an example, the operation is to read a detection signal (detected current, detected charge) from the column lines DL0, DL1, DL2, ..., DL319.

The A/D converter 130 performs processing for the A/D conversion of detected voltage (measured voltage, maximum voltage) acquired at the read circuit 120 into digital data. The resulting digital data DOUT is then outputted. More specifically, the A/D converter 130 is provided with A/D converters corresponding to the plurality of column lines. These A/D converters perform A/D conversion on the detected voltage acquired by the read circuit 120 at the corresponding column lines. Also, just one A/D converter may be provided corresponding to a plurality of column lines, and this one A/D converter may subject the detected voltage for a plurality of column lines to A/D conversion in time series.

The controller 150 (timing generator) produces various kinds of control signal and outputs these to the row selection circuit 110, the read circuit 120, and the A/D converter 130. For example, a control signal for charging or discharging (reset) is produced and outputted. Alternatively, a signal that controls the timing for each circuit is produced and outputted.

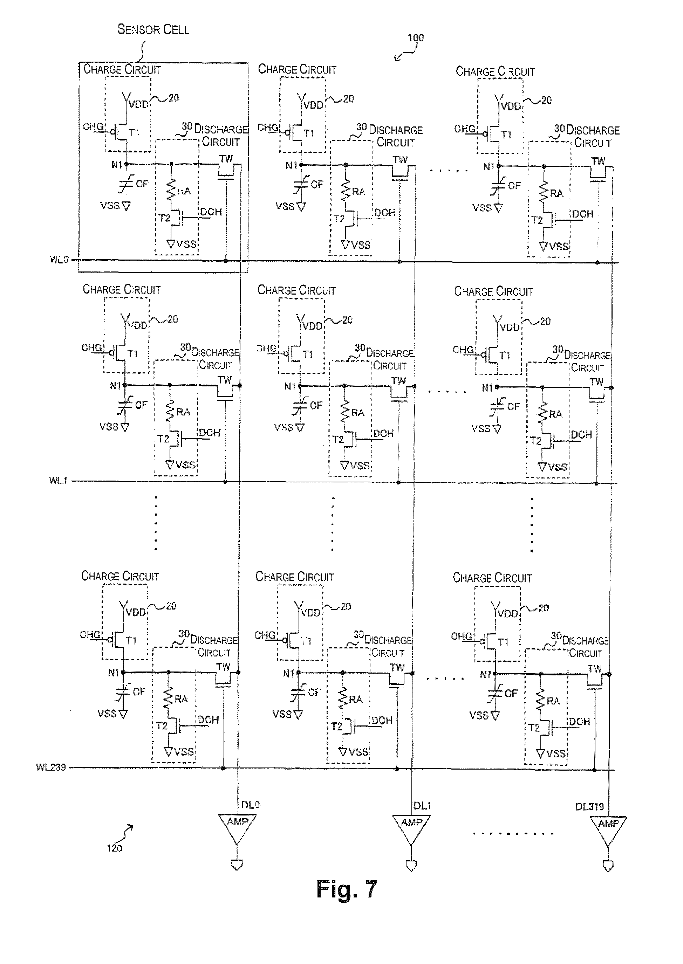

FIG. 7 is a detail configuration example of the sensor array 110 and the read circuit 120. In FIG. 7, the configuration example shown in FIGS. 3A and 3B is used for the sensor cells and the read circuits, but modifications in which other configurations and methods are combined are also possible.

Each sensor cell includes a heat sensing element CF, a detection circuit 20, a discharge circuit 30, and a selection switching element TW. The charge circuit 20 is provided between the detection node N1, which is a node at one end of the heat sensing element CF, and the high potential-side power supply node VDD (more broadly, the second power supply node). The discharge circuit 30 is provided between the detection node N1 and the low potential-side power supply node VSS (more broadly, the first power supply node). The discharge transistor T2 is provided between the detection node N1 and the one or more column lines DL (DL0 to DL319).

The operation of the sensor cells is the same as the operation of the detection circuit described above (FIGS. 3A and 3B). When the row line WL0 is selected, the selection switching element TW, whose gate is connected to the row line WL0, goes into its on state. The one or more sensor cells corresponding to the row line WL0 are electrically connected to the corresponding column lines DL (DL0 to CL319). At this point row lines WL other than the row line WL0 {WL1 to WL239) are not selected.

In the charging period TC, the charging control signal CHG is at the L level (low potential level), so the charge transistor T1 is in its on state. Also, the discharge control signal DCH is at the L level, so the discharge transistor T2 is in its off state. As a result, voltage at the H level (high potential level) is applied to the heat sensing element CF, charge circuit flows through the charge transistor T1, and the CF is charged. Also, in the charging period TC, the discharge transistor T2 is in its off state and no current flows to the discharge resistance element RA, so power consumption can be reduced.

In the discharge period TD, the charging control signal CHG is at the H level, so the charge transistor T1 is in its off state. Also, the discharge control signal DCH is at the H level, so the discharge transistor T2 is in its on state. As a result, no more voltage is applied to the heat sensing element CF, discharge current flows through the discharge resistance element RA and the discharge transistor T2, and the CF is discharged. This discharge begins to lower the detected voltage VOUT (output voltage).

In the read period TR, the charging control signal CHG is at the H level, so the charge transistor T1 goes into its off state. Also, the discharge control signal DCH is at the L level, so the discharge transistor T2 is in its off state. As a result, the discharge of the heat sensing element CF stops, and the detected voltage VOUT is maintained at the voltage value at the point when discharge stopped. This voltage value is read by the read circuit 120 via the column lines DL (DL0 to DL319) corresponding to the selected sensor cells.

Thus, detection signals from the one or more sensor cells corresponding to the row line WL0 are read for each column. After this, the other row lines WL (WL1 to WL239) are successively selected, and detection signals are read from the sensor cells in the same manner as above.

Regarding the timing of the charging period TC, the discharge period TD, and the read period TR, various methods are possible in addition to a method in which a cycle of charging, discharging, and reading is repeated successively one row at a time as above. For instance, a method in which charging and discharging are performed at the same time for all of the sensor cells, after which reading is performed successively one row at a time is also possible.

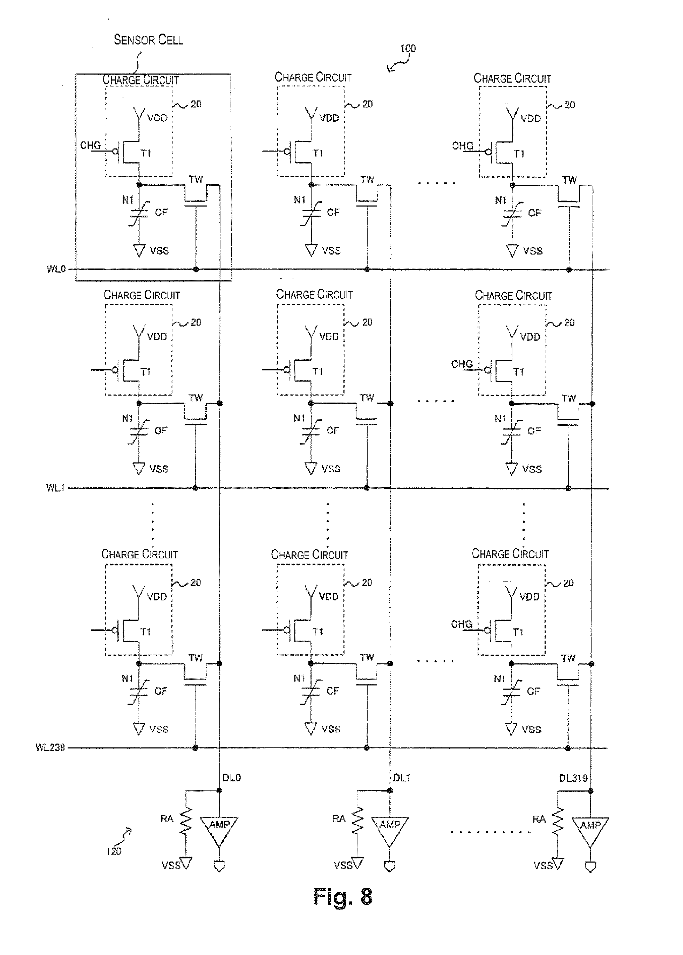

FIG. 8 is another configuration example of the sensor array 100 and the read circuit 120. With the configuration example in FIG. 8, no discharge circuit is provided to the sensor cells, and the discharge resistance element RA is provided to the read circuit 120.

More specifically, the sensor cells each include a heat sensing element CF, a charge circuit 20, and a selection switching element TW. The charge circuit 20 is provided between the detection node N1, which is a node at one end of the heat sensing element CF, and the high potential-side power supply node VDD (more broadly, the second power supply node). The selection switching element TW is provided between the detection node N1 and the one or more column lines DL (DL0 to DL319).

The read circuit 120 includes a discharge resistance element RA provided between the low potential-side power supply node VSS (more broadly, the first power supply node) and the one or more column lines DL (DL0 to DL319).

In the charging period TC, the charge circuit 20 performs charging of the heat sensing element CF by putting the selection switching element TW in its off state, that is, its unselected state. In the discharge period TD, the heat sensing element CF is discharged via the discharge resistance element RA connected to the corresponding column lines DL (DL0 to DL319) by putting the selection switching element TW in its on state, that is, its selected state. In the read period TR, the discharge of the heat sensing element CF is stopped by putting the selection switching element TW in its off state, that is, its unselected state. The detected voltage VOUT is maintained at the voltage value at the point when the discharge was stopped. This voltage value is read by the read circuit 120.

As a result, the discharge resistance element is shared by each column, so the configuration of the sensor cells can be simplified. Also, the total number of resistance elements for the heat sensor device as a whole can be reduced, so it is possible to reduce the effect of variance in the resistance value of the resistance elements.

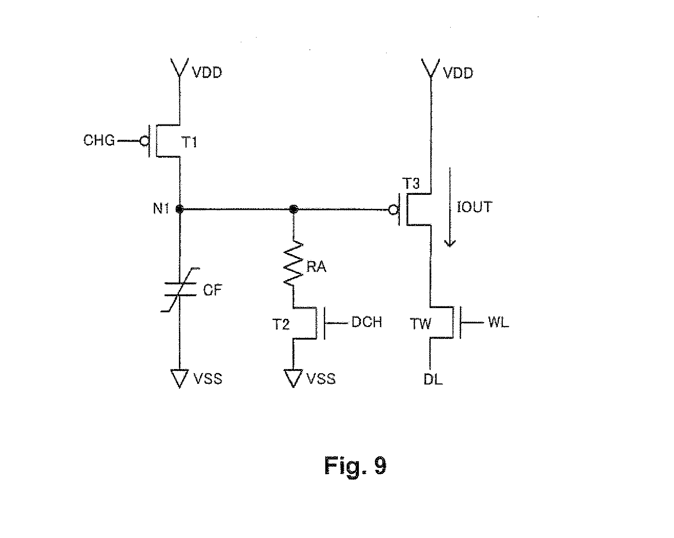

FIG. 9 is another configuration example of a sensor cell in this embodiment. With the sensor cell shown in FIG. 9, a P-type transistor T3 is added to the sensor cell discussed above (FIG. 7), the gate of T3 is controlled by the detected voltage VOUT, and the output current IOUT corresponding to VOUT is outputted. As a result, propagation delay caused by wiring capacitance of the column lines DL (parasitic capacitance) can be reduced, and the time it takes for reading can be shortened. Also, the effect of noise picked up by the column lines DL can be reduced.

As described above, the heat sensor device of this embodiment employs a method in which the amount of polarization (capacitance) of a heat sensing element is detected, so there is no need for a chopper or the like. Also, since the sensor cells have a simple circuit configuration, the amount of noise generated can be reduced, and the yield can be increased. Also, since the size of the sensor cells can be reduced, the accuracy of the heat sensor device can be improved. Furthermore, since no current flows to the discharge resistance element in the charging period, power consumption can be cut.

An advantage to the sensor cell shown in FIG. 8 is that since no discharge circuit is included, the size can be smaller, so the precision of the heat sensor device can be improved. Since the total number of resistance elements can be reduced, an advantage is that variance in the resistance value of the resistance elements is less likely to have an effect. However, because the discharge takes longer due to the wiring capacitance and wiring resistance of the column lines DL, a disadvantage is that measurement takes longer.

With the sensor cell shown in FIG. 9, an advantage is that propagation delay caused by wiring capacitance of the column lines DL (parasitic capacitance) can be reduced, the time it takes for reading can be shortened, and the effect of noise picked up by the column lines DL can be reduced. However, because the sensor cell is larger in size, this is disadvantageous in terms of increasing precision.

### 4. Electronic Device

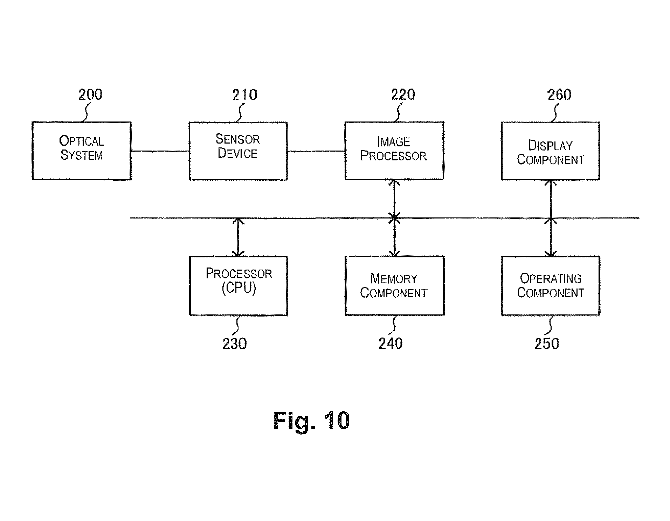

FIG. 10 is a configuration example of an electronic device including the heat sensor device or the heat sensor detection circuit of this embodiment. This electronic device is an infrared camera, for example, and includes an optical system 200, a heat sensor device 210, an image processor 220, a processor 230, a memory component 240, an operating component 250, and a display component 260. The electronic device of this embodiment is not limited to the configuration shown in FIG. 10, and various modifications are possible, such as omitting some of its constituent elements (such as the optical system, the operating component, or the display component), or adding other constituent elements.

The optical system 200 includes, for example, one or more lenses, a driver for driving these lenses, and so forth. It also forms an object image on the sensor device 210, etc. If needed, it may also perform focal adjustment.

The heat sensor device 210 is the one described through reference to FIG. 6A, etc., and performs imaging processing of an object image. The image processor 220 performs various kinds of image processing, such as image correction processing, on the basis of digital image data (pixel data) from the heat sensor device 210.

The processor 230 performs overall control of the electronic device, or perform control over the various blocks in the electronic device. This processor 230 can be a CPU, for example. The memory component 240 stores various kinds of information, and functions, for example, as the working area of the image processor 220 and the processor 230. The operating component 250 serves as an interface that allows the user to control the electronic device, and comprises, for example, various buttons, a GUI (graphic user interface) screen, or the like. The display component 260 displays images acquired by the heat sensor device 210, GUI screens, and so forth, and can be any of various displays such as a liquid crystal display or an organic electroluminescence display.

This embodiment can be applied to various kinds of electronic device, such as night vision devices that capture object images at night, thermographic devices that acquire the temperature distribution of an object, intrusion detection devices that detect intruders, analytic devices (measurement devices) that perform analysis (measurement) of physical information about an object, security devices that detect fire or heat, factory automation devices installed in factories and the like, and so forth.

This embodiment was described in detail above, but it should be readily understood by a person skilled in the art that many modifications are possible without departing substantially from the novel features and effects of the present invention. Therefore, all of these modifications are encompassed by the scope of the present invention. For example, in the Specification and Drawings, terms (VSS node, VDD node) that are used at least once along with terms having broader or the same definitions (first power supply node, second power supply node) can be substituted with these different terms anywhere in the Specification or Drawings. Also, the configuration and operation of the heat sensor detection device, heat sensor device, and electronic device are not limited to those described in this embodiment, and various modifications are possible.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A detection circuit for a heat sensor comprising:
a charge circuit provided between a detection node, which is a node at one end of a heat sensing element, and a second power supply node; and
a discharge circuit provided between the detection node and a first power supply node, the discharge circuit having a discharge resistance element and a discharge transistor provided in series between the detection node and the first power supply node.

2. The detection circuit for a heat sensor according to Claim 1, wherein
the charge circuit includes a charge transistor provided between the second power supply node and the detection node,
in a charging period the charge transistor is in its on state and the discharge transistor is in its off state, and
in a discharge period the charge transistor is in its off state and the discharge transistor is in its on state.

3. The detection circuit for a heat sensor according to Claim 2, further comprising
a control circuit, and
a voltage detection circuit configured to detect the voltage of the detection node, the control circuit being configured to
perform a control action that puts the charge transistor in
its on state and puts the discharge transistor in its off
state in the charging period,
perform a control action that puts the charge transistor in
its off state and puts the discharge transistor in its on
state in the discharge period, and
perform a control action that puts the charge transistor in
its off state and puts the discharge transistor in its off state, and direct the voltage detection circuit to sample the voltage of the detection circuit, in a read period that follows the discharge period.

4. The detection circuit for a heat sensor according to Claim 3, wherein
the control circuit changes the timing at which the discharge transistor is put in its off state, according to the measurement mode of the heat sensing element.

5. The detection circuit for a heat sensor according to Claim 4, wherein when the measurement mode of the heat sensing element is low temperature measurement mode, the control circuit sets the timing at which the discharge transistor is put in its off state to a first timing, and
when the measurement mode of the heat sensing element is high temperature measurement mode, the control circuit sets the timing at which the discharge transistor is put in its off state to a second timing that is later than the first timing.

6. A heat sensor device comprising:
a sensor array having a plurality of sensor cells;
one or more row lines;
one or more column lines;
a row selection circuit connected to the one or more row lines;
a read circuit connected to the one or more column lines; and
a control circuit,
each of the plurality of sensor cells including
a heat sensing element,
a charge circuit provided between a detection node, which
is a node at one end of the heat sensing element, and
a second power supply node,
a discharge circuit provided between the detection node
and a first power supply node, and
a selection switching element provided between the
detection node and any of the one or more column lines.

7. A heat sensor device comprising:
a sensor array having a plurality of sensor cells;
one or more row lines;
one or more column lines;
a row selection circuit connected to the one or more row lines;
a read circuit connected to the one or more column lines; and
a control circuit,
each of the plurality of sensor cells including
a heat sensing element,
a charge circuit provided between a detection node, which
is a node at one end of the heat sensing element, and
a second power supply node, and
a selection switching element provided between the
detection node and any of the one or more column
lines,
the read circuit having a discharge resistance element provided between the first power supply node and any of the one or more column lines, wherein
in a charging period the charge circuit charges the heat sensing element, and in a discharge period that follows the charging period the selection switching element is put in its on state and the heat sensing element is discharged via the discharge resistance element.

8. An electronic device comprising the detection circuit for a heat sensor according to Claim 1.

9. An electronic device comprising the detection circuit for a heat sensor according to Claim 2.

10. An electronic device comprising the detection circuit for a heat sensor according to Claim 3.

11. An electronic device comprising the detection circuit for a heat sensor according to Claim 4.

12. An electronic device comprising the detection circuit for a heat sensor according to Claim 5.

13. An electronic device comprising the heat sensor device according to Claim 6.

14. An electronic device comprising the heat sensor device according to Claim 7.
